# EUROPÄISCHE PATENTSCHRIFT

(11) **EP 1 779 008 B1**
(45) Veröffentlichungstag und Bekanntmachung des Hinweises auf die Patenterteilung: **12.12.2007**
(21) Anmeldenummer: 05778423.3
(22) Anmeldetag: 03.08.2005
(51) Int. Cl.: F16J 15/32, F01D 11/00, F01D 11/02, F01D 11/12

(54) **DICHTUNGSANORDNUNG**
SEALING ARRANGEMENT
ENSEMBLE D' ETANCHE ITE

(30) Priorität: 11.08.2004 DE 102004038933
(43) Veröffentlichungstag der Anmeldung: 02.05.2007
(73) Patentinhaber: MTU Aero Engines GmbH, 80995 München (DE)
(72) Erfinder: GRÄBELDINGER, Wilhelm, 80637 München (DE)
(86) Internationale Anmeldenummer: PCT/DE2005/001366
(87) Internationale Veröffentlichungsnummer: WO 2006/015577

(56) Entgegenhaltungen:
- US-A- 5 474 305
- US-A1- 2002 020 968
- US-B1- 6 168 162

## Beschreibung

Die Erfindung betrifft eine Dichtungsanordnung nach dem Oberbegriff des Patentanspruchs 1. Des Weiteren betrifft die Erfindung eine Strömungsmaschine, eine Gasturbine sowie eine Dampfturbine.

Bei Strömungsmaschinen, insbesondere bei Gasturbinen wie Flugtriebwerken, gibt es eine Reihe von Anwendungsfällen, in welchen zwei relativ zueinander bewegte Teile, nämlich ein Stator und ein Rotor der Strömungsmaschine, gegen einen die Strömungsmaschine durchlaufenden Gasstrom abzudichten sind. So bestehen insbesondere Gasturbinen unter anderem aus mindestens einem Verdichter sowie mindestens einer Turbine, wobei der oder jeder Verdichter sowie die oder jede Turbine einen Rotor aufweist, der gegenüber einem feststehenden Stator rotiert. Bei dem Stator handelt es sich dann insbesondere um ein feststehendes Gehäuse, dem feststehende Leitschaufeln zugeordnet sind. Dem Rotor einer Turbine bzw. eines Verdichters sind Laufschaufeln zugeordnet, die sich zusammen mit dem Rotor gegenüber den feststehenden Leitschaufeln sowie dem feststehenden Gehäuse drehen.

Zur Optimierung des Wirkungsgrads von insbesondere Gasturbinen ist es unter anderem erforderlich, Leckageströmungen zwischen dem rotierenden Rotor und dem feststehenden Stator von Verdichter und Turbine zu minimieren. Hierbei muss insbesondere ein Spalt zwischen radial innenliegenden Enden der feststehenden Leitschaufeln und dem sich drehenden Rotor abgedichtet werden. Eine Dichtungsanordnung zur Abdichtung des Spalts zwischen den radial innenliegenden Enden der feststehenden Leitschaufeln und dem sich drehenden Rotor bezeichnet man auch als "inner air seal". Ein weiterer abzudichtender Spalt befindet sich zum Beispiel zwischen den radial außenliegenden Enden der rotierenden Laufschaufeln und dem feststehenden Gehäuse. Eine Dichtungsanordnung zur Abdichtung des Spalts zwischen den radial außenliegenden Enden der rotierenden Laufschaufeln und dem Gehäuse bezeichnet man auch als "outer air seal".

Darüber hinaus sind weitere Spalte zwischen einem rotierenden Rotor und einem feststehenden Stator abzudichten. Dichtungsanordnungen zwischen einem Rotor und einem Stator werden auch als dynamische Dichtungsanordnungen bezeichnet.

Aus dem Stand der Technik ist es bereits bekannt, dynamische Dichtungsanordnungen zur nicht-hermetischen Abdichtung eines Spalts zwischen einem Rotor und einem Stator als Bürstendichtung auszubilden. Als Stand der Technik, der Bürstendichtungen zeigt, soll hier auf die DE 195 27 605 C2 oder die DE 101 22 732 C2, bzw US 9 474 305 verwiesen werden. Bei den obigen aus dem Stand der Technik bekannten Bürstendichtungen wird die Bürstendichtung von mehreren drahtartigen Borsten gebildet, die um einen Borstenträger gewickelt sind, wobei der Borstenträger aus einem Kern und einem Klemmring besteht. Die Einheit aus Borstenträger und Borsten, welche die eigentliche Bürstendichtung bildet, ist in einem Aufnahmeraum angeordnet, welcher von einem Stützring und einem Deckring begrenzt ist.

Bei den Bürstendichtungen gemäß DE 195 27 605 C2 sowie DE 101 22 732 C2 ist der Borstenträger aus dem Kern sowie dem Klemmring als geschlossener Ring ausgebildet, der im Aufnahmeraum fest bzw. unbeweglich positioniert, insbesondere geklemmt, ist. Bedingt durch diese nach dem Stand der Technik bekannte Ausgestaltung des Borstenträgers als geschlossener Ring ist derselbe nicht elastisch, sodass einerseits zum Beispiel Exzentrizitäten oder sonstige mechanische Veränderungen des abzudichtenden Spalts zwischen Rotor und Stator und andererseits durch zum Beispiel unterschiedliche thermische Ausdehnungskoeffizienten bedingte thermische Veränderungen des abzudichtenden Spalts zwischen Rotor und Stator von bekannten Bürstendichtungen nur eingeschränkt ausgeglichen werden können. Bei den aus dem Stand der Technik bekannten Bürstendichtungen erfolgt der Ausgleich eines sich verändernden, abzudichtenden Spalts ausschließlich durch das Einfedern der Borsten, wodurch einerseits eine erhebliche Reibungswärme erzeugt wird und wodurch andererseits die Borsten der Bürstendichtung einem deutlichen Verschleiß unterliegen. Die aus dem Stand der Technik bekannten Bürstendichtungen können demnach sich zum Beispiel während des Betriebs einstellende Änderungen des abzudichtenden Spalts nur unzureichend kompensieren.

Hiervon ausgehend liegt der vorliegenden Erfindung das Problem zu Grunde, eine neuartige Dichtungsanordnung zu schaffen. Dieses Problem wird dadurch gelöst, dass die eingangs genannte Dichtungsanordnung durch die Merkmale des kennzeichnenden Teils des Patentanspruchs 1 weitergebildet ist. Erfindungsgemäß ist der Dichtelementträger als einfach oder mehrfach unterbrochener Ring ausgebildet, wobei freie Enden des Dichtelementträgers sich im Bereich von Unterbrechungsstellen in Umfangsrichtung überlappen, wobei Konturen des Stützelements und Deckelements an die Konturen des Dichtelementträgers und der Dichtelemente angepasst sind, und wobei mindestens einem Ende jedes Teils des Dichtelementträgers eine Verdrehsicherungseinrichtung zugeordnet ist.

In der bevorzugten Ausführungsform der Erfindung, in welcher die Dichtung als Bürstendichtung, die Dichtelemente als Borsten und der Dichtelementträger als Borstenträger ausgebildet ist/sind, stellt die erfindungsgemäße Dichtungsanordnung eine selbstadaptierende Bürstendichtung zur Abdichtung eines Spalts zwischen einem Rotor und einem Stator bereit, die Änderungen des abzudichtenden Spalts selbsttätig ausgleichen kann, ohne dass dieselbe hierbei einem erhöhten Verschleiß unterliegt. Der Borstenträger ist nicht mehr wie beim Stand der Technik als geschlossener Ring ausgebildet, sondern vielmehr als unterbrochener bzw. spiralförmiger bzw. offener Ring, dessen freie Enden sich in Umfangsrichtung überlappen. Ferner ist der Borstenträger im Aufnahmeraum frei beweglich, wobei eine Verdrehsicherungseinrichtung die Beweglichkeit in Umfangsrichtung begrenzt. Der als spiralförmiger Ring ausgebildete Borstenträger kann sich einerseits im Aufnahmeraum exzentrisch verschieben und andererseits kann derselbe durch Zunahme oder Abnahme seines Umfangs den Innendurchmesser der Bürstendichtung an einen Außendurchmesser des Rotors anpassen.

Hierdurch ergeben sich eine Vielzahl von Vorteilen der erfindungsgemäßen Dichtungsanordnung. In allen Betriebszuständen kann durch die selbsttätige Anpassung des Innendurchmessers der Bürstendichtung eine minimale Leckage des abzudichtenden Spalts sichergestellt werden. Sowohl Exzentrizitäten des Rotors bzw. Stators als auch im Betrieb bedingte Spaltänderungen können selbsttätig ausgeglichen werden. Hierdurch ergibt sich eine deutliche Erweiterung des Einsatzspektrums von Bürstendichtungen, bei gleichzeitiger Verringerung des Verschleißes derselben.

Nach einer vorteilhaften Weiterbildung der Erfindung sind die sich in Umfangsrichtung überlappenden Enden des als spiralförmiger Ring ausgebildeten Borstenträgers in Axialrichtung und in Radialrichtung versetzt, wobei die Enden des Borstenträgers derart versetzt sind, dass ein radial innenliegendes Ende des Borstenträgers an Borsten anliegt, die am radial außenliegenden Ende des Borstenträgers fixiert sind.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: einen schematisierten Querschnitt durch einen Rotor und einen Stator zusammen mit einer erfindungsgemäßen Dichtungsanordnung zur nicht-hermetischen Abdichtung eines Spalts zwischen dem Rotor und dem Stator;
- Fig. 2: einen Querschnitt durch die erfindungsgemäße Dichtungsanordnung entlang der Schnittlinie II-II gemäß Fig. 1; und
- Fig. 3: einen Querschnitt durch die erfindungsgemäße Dichtungsanordnung entlang der Schnittlinie III-III gemäß Fig. 2.

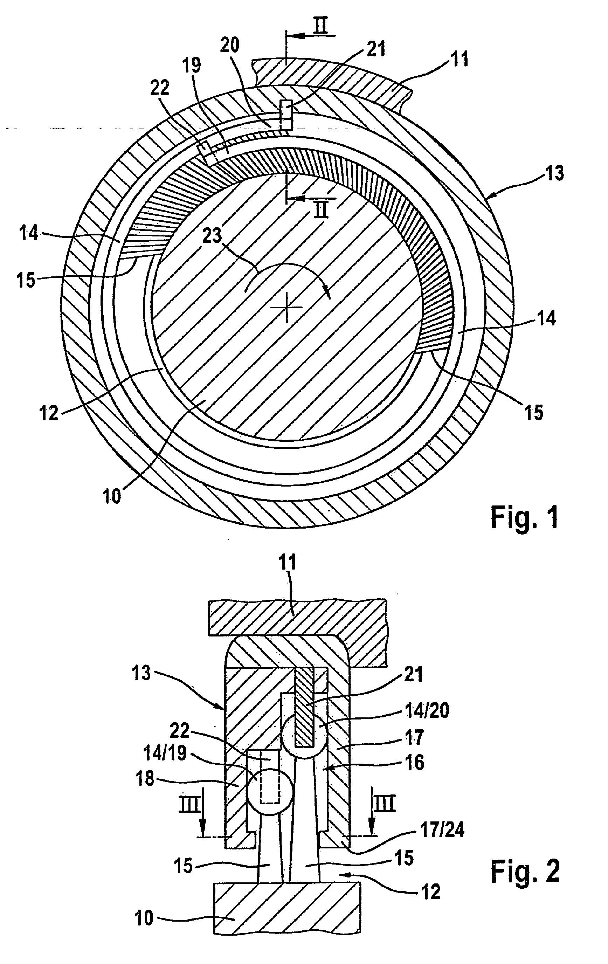

Nachfolgend wird die hier vorliegende Erfindung unter Bezugnahme auf Fig. 1 bis 3 in größerem Detail beschrieben.

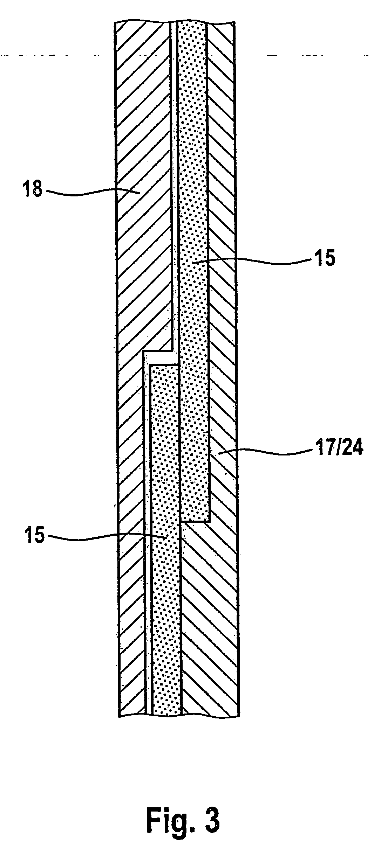

Fig. 1 zeigt einen schematisierten Querschnitt durch einen Rotor 10 sowie einen den Rotor 10 umschließenden Stator 11 in axialer Blickrichtung, wobei zwischen dem Rotor 10 und dem Stator 11 ein abzudichtender Spalt 12 ausgebildet ist. Zur Abdichtung des Spalts 12 zwischen dem Rotor 10 und dem Stator 11 ist eine Bürstendichtung vorgesehen, die aus einem Bürstendichtungsgehäuse 13, einem Borstenträger 14 und mehreren am Borstenträger 14 fixierten Borsten 15 gebildet wird. Fig. 2 zeigt die Anordnung der Fig. 1 entlang der Schnittrichtung II-II in Fig. 1 und damit in Umfangsblickrichtung; Fig. 3 zeigt die Anordnung der Fig. 1 und 2 entlang der Schnittlinie III-III in Fig. 2, und damit in Radialblickrichtung.

Wie Fig. 2 entnommen werden kann, ist der Borstenträger 14 zumindest abschnittsweise in einem Aufnahmeraum 16 positioniert, wobei freie Enden der Borsten 15 aus dem Aufnahmeraum 16 herausragen und zur Abdichtung des Spalts 12 auf dem Rotor 10 aufstehen. Der Aufnahmeraum 16 wird von einem Stützelement 17 sowie einem Deckelement 18 begrenzt, wobei das Stützelement 17 auf der Seite niedrigeren Drucks des abzudichtenden Spalts 12 angeordnet ist. Das Stützelement 17 wird häufig auch als Stützring und das Deckelement 18 häufig auch als Deckring bezeichnet.

Im Sinne der hier vorliegenden Erfindung wird vorgeschlagen, den Borstenträger 14 als unterbrochenen bzw. spiralförmigen Ring auszubilden, wobei freie Enden 19 und 20 des Borstenträgers 14 sich in Umfangsrichtung überlappen. Der Borstenträger 14 ist demnach als offener und elastischer Ring ausgebildet, der im Aufnahmeraum 16 nicht fixiert ist, sondern vielmehr innerhalb gewisser Grenzen frei beweglich ist.

So ist der Borstenträger 14 in Umfangsrichtung beweglich, wobei die Beweglichkeit in Umfangsrichtung im gezeigten Ausführungsbeispiel durch zwei Verdrehsicherungseinrichtungen 21 und 22 begrenzt wird. Eine erste Verdrehsicherungseinrichtung 21 ist einem ersten Ende 20 des Borstenträgers 14 zugeordnet, wobei diese erste Verdrehsicherungseinrichtung 21 die Beweglichkeit des Borstenträgers 14 in einer Hauptdrehrichtung 23 des Rotors 10 limitiert bzw. begrenzt. Eine zweite Verdrehsicherungseinrichtung 22, die dem zweiten freien Ende 19 des Borstenträgers 14 zugeordnet ist, begrenzt die Beweglichkeit des Borstenträgers 14 entgegengesetzt zur Hauptdrehrichtung 23 des Rotors 10. Neben der Beweglichkeit in Umfangsrichtung ist weiterhin eine Beweglichkeit in Radialrichtung gegeben. Durch die Beweglichkeit in Radialrichtung kann sich der Innendurchmesser selbsttätig an Exzentrizitäten bzw. Änderungen des Spalts 12 anpassen. Weiterhin ist im gewissen Umfang eine Beweglichkeit in Axialrichtung gegeben. Die Beweglichkeiten in Radialrichtung sowie Axialrichtung werden durch die geometrischen Abmessungen des Aufnahmeraums 16 bzw. durch die Konturen von Stützelement 17 bzw. Deckelement 18 begrenzt.

Der als spiralförmiger Ring ausgebildete Borstenträger 14 bildet im gezeigten Ausführungsbeispiel sowohl eine Axialspirale als auch eine Durchmesserspirale. Unter Axialspirale soll verstanden werden, dass die sich in Umfangsrichtung überlappenden Enden 19 und 20 des Borstenträgers 14 in Axialrichtung zueinander versetzt sind. Unter Durchmesserspirale soll verstanden werden, dass die sich in Umfangsrichtung überlappenden Enden 19 und 20 des Borstenträgers 14 in Radialrichtung versetzt sind. Fig. 2 kann einerseits der axiale Versatz als auch der radiale Versatz der Enden 19 und 20 des Borstenträgers 14 entnommen werden. Dabei sind gemäß Fig. 2 die Enden 19 und 20 des Borstenträgers 14 derart zueinander versetzt, dass ein radial innenliegendes Ende 19 des Borstenträgers 14 an den Borsten 15 anliegt, die am radial außenliegenden Ende 20 des Borstenträgers 14 fixiert sind. Obwohl im Sinne der hier vorliegenden Erfindung der Versatz der freien Enden 19 und 20 des Borstenträgers 14 in Axialrichtung ausreichend wäre, ist der zusätzliche Versatz derselben in Radialrichtung zur Verbesserung der Dichtwirkung bevorzugt.

Wie bereits mehrfach erwähnt, ist der Borstenträger 14 als spiralförmiger Ring mit sich in Umfangsrichtung überlappenden, freien Enden 19 und 20 ausgebildet, wobei die freien Enden 19 und 20 zumindest in Axialrichtung, vorzugsweise auch in Radialrichtung, zueinander versetzt sind. Hierdurch ergibt sich eine spiralförmige bzw. schraubenlinienförmige Kontur des Borstenträgers 14, der dann auch die am Borstenträger 14 fixierten Borsten 15 folgen. Dieser spiralförmigen bzw. schraubenlinienförmigen Kontur des Borstenträgers 14 ist die Kontur des Stützelements 17 bzw. einer Stützlippe 24 desselben angepasst. Die durch das Stützelement 17 bzw. die Stützlippe 24 ausgebildete Anlagefläche für die Borsten 15 der Bürstendichtung 13 folgt demnach der spiralförmigen bzw. schraubenlinienförmigen Kontur der Bürstendichtung und ist dabei gewindeartig ausgebildet.

Wie Fig. 1 zeigt, sind die Borsten 15 der Bürstendichtung 13 gegenüber der Radialrichtung vorzugsweise angestellt. Die Borsten können jedoch auch ohne eine derartige Anstellung parallel zur Radialrichtung verlaufen.

Die erfindungsgemäße Bürstendichtung kann überall dort eingesetzt werden, wo zwischen einem Rotor und einem Stator ein radialer Spalt nichthermetisch abzudichten ist. Besonders bevorzugt ist die Verwendung der erfindungsgemäßen Dichtungsanordnung in Strömungsmaschinen, insbesondere in Gasturbinen, wie Flugtriebwerken oder auch in Dampfturbinen. So kann mit der erfindungsgemäßen Dichtungsanordnung zum Beispiel eine sogenannte Inner Air Seal als auch eine sogenannte Outer Air Seal zur Abdichtung eines Radialspalts zwischen den Enden feststehender Leitschaufeln und einem Rotor bzw. eines Spalts zwischen den freien Enden rotierender Laufschaufeln und einem Gehäuse eines Verdichters bzw. einer Turbine der Gasturbine realisiert werden.

Die Dichtung muss nicht als Bürstendichtung ausgebildet sein. Vielmehr können im Sinne der hier vorliegenden Erfindung die Dichtelemente zum Beispiel als Streifen oder Lamellen oder Segmente ausgebildet sein. Bei den Streifen oder Lamellen kann es sich um lasergeschnittene Elemente handeln. Die Segmente können in Umfangsrichtung einander überlappen. Die Streifen oder Lamellen oder Segmente können des weiteren auch integraler Bestandteil des Dichtelementträgers sein.

Die erfindungsgemäße Dichtungsanordnung stellt in allen Betriebszuständen eine minimale Leckage des abzudichtenden Spalts bereits, wobei sich die erfindungsgemäße Dichtungsanordnung selbsttätig an Exzentrizitäten oder betrieblichbedingte Veränderungen des abzudichtenden Spalts anpasst. Die Dichtungsanordnung kann demnach als selbstadaptierende Dichtung bezeichnet werden. Da die erfindungsgemäße Dichtungsanordnung gegenüber den aus dem Stand der Technik bekannten Dichtungsanordnungen durch eine deutliche Vergrößerung der zulässigen Überdeckung zum Rotor gekennzeichnet ist, ergibt sich ein deutlich erweiterter Einsatzbereich für Bürstendichtungen. Weiterhin wird der Verschleiß der Borsten minimiert. Da sich der Innendurchmesser der Bürstendichtung selbsttätig anpasst, kann dieselbe mit einer größeren Toleranz gefertigt werden, wodurch sich die Herstellkosten deutlich reduzieren.

## Patentansprüche

1. Dichtungsanordnung, insbesondere für eine Strömungsmaschine, zur nicht-hermetischen Abdichtung eines Spalts (12) zwischen einem Rotor (10) und einem Stator (11), mit einer Dichtung, welche über mehrere Dichtelemente verfügt, die an einem Dichtelementträger fixiert sind, wobei der Dichtelementträger zumindest abschnittsweise in einem Aufnahmeraum (16) angeordnet ist, der von einem Stützelement (17) und einem Deckelement (18) begrenzt ist,
**dadurch gekennzeichnet,**
**dass** der Dichtelementträger als einfach oder mehrfach unterbrochener Ring ausgebildet ist, wobei freie Enden (19, 20) des Dichtelementträgers sich im Bereich von Unterbrechungsstellen in Umfangsrichtung überlappen, wobei Konturen des Stützelements (17) und Deckelements (18) an die Konturen des Dichtelementträgers und der Dichtelemente (15) angepasst sind, und wobei mindestens einem Ende (19, 20) jedes Teils des Dichtelementträgers eine Verdrehsicherungseinrichtung (21, 22) zugeordnet ist.

2. Dichtungsanordnung nach Anspruch 1,
**dadurch gekennzeichnet,**
**dass** die Dichtung als Bürstendichtung, die Dichtelemente als Borsten (15) und der Dichtelementträger als Borstenträger (14) ausgebildet ist/sind.

3. Dichtungsanordnung nach Anspruch 2,
**dadurch gekennzeichnet,**
**dass** der Borstenträger (14) als offener und elastischer Ring ausgebildet ist, der im Aufnahmeraum (16) beweglich gelagert ist.

4. Dichtungsanordnung nach Anspruch 3,
**dadurch gekennzeichnet,**
**dass** der Borstenträger (14) in Umfangsrichtung beweglich ist, wobei die oder jede Verdrehsicherungseinrichtung (20, 21) die Beweglichkeit in Umfangsrichtung limitiert.

5. Dichtungsanordnung nach einem oder mehreren der Ansprüche 2 bis 4,
**dadurch gekennzeichnet,**
**dass** einem ersten Ende (20) des Borstenträgers (14) eine erste Verdrehsicherungseinrichtung (21) zugeordnet ist, welche die Beweglichkeit in einer Hauptdrehrichtung des Rotors (10) limitiert.

6. Dichtungsanordnung nach Anspruch 5,
**dadurch gekennzeichnet,**
**dass** einem zweiten Ende (19) des Borstenträgers (14) eine zweite Verdrehsicherungseinrichtung (22) zugeordnet ist, welche die Beweglichkeit entgegengesetzt zur Hauptdrehrichtung des Rotors limitiert.

7. Dichtungsanordnung nach einem oder mehreren der Ansprüche 2 bis 6,
**dadurch gekennzeichnet,**
**dass** die sich in Umfangsrichtung überlappenden Enden (19, 20) des als spiralförmiger Ring ausgebildeten Borstenträgers (14) in Axialrichtung versetzt sind.

8. Dichtungsanordnung nach einem oder mehreren der Ansprüche 2 bis 7,
**dadurch gekennzeichnet,**
**dass** die sich in Umfangsrichtung überlappenden Enden (19, 20) des als spiralförmiger Ring ausgebildeten Borstenträgers (14) in Axialrichtung und in Radialrichtung versetzt sind.

9. Dichtungsanordnung nach Anspruch 8,
**dadurch gekennzeichnet,**
**dass** die Enden (19, 20) des Borstenträgers (14) derart versetzt sind, dass ein radial innenliegendes Ende (19) des Borstenträgers (14) an Borsten (15) anliegt, die am radial außenliegenden Ende (20) des Borstenträgers (14) fixiert sind.

10. Dichtungsanordnung nach einem oder mehreren der Ansprüche 2 bis 9,
**dadurch gekennzeichnet,**
**dass** die Kontur des Stützelements (17) an die Kontur des als spiralförmiger Ring ausgebildeten Borstenträgers (14) derart angepasst ist, dass die Kontur des Stützelements (14) gewindeartig der spiralförmigen bzw. schraubenlinienförmigen Kontur des Borstenträgers (14) folgt.

11. Dichtungsanordnung nach einem oder mehreren der Ansprüche 2 bis 10,
**dadurch gekennzeichnet,**
**dass** die Borsten (15) der Bürstendichtung parallel zur Radialrichtung angeordnet und gegenüber der Radialrichtung angestellt sind.

12. Dichtungsanordnung nach Anspruch 1,
**dadurch gekennzeichnet,**
**dass** die Dichtelemente Streifen oder Lamellen oder Segmente ausgebildet ist/sind.

13. Dichtungsanordnung nach einem oder mehreren der Ansprüche 1 bis 12,
**dadurch gekennzeichnet,**
**dass** das Stützelement und das Deckelement als Konturen am Stator ausgeführt sind.

14. Strömungsmaschine mit mindestens einer Dichtungsanordnung nach einem oder mehreren der Ansprüche 1 bis 13.

15. Gasturbine, insbesondere Flugtriebwerk, mit mindestens einer Dichtungsanordnung nach einem oder mehreren der Ansprüche 1 bis 13.

16. Dampfturbine mit mindestens einer Dichtungsanordnung nach einem oder mehreren der Ansprüche 1 bis 13.

## Claims

1. A sealing arrangement, in particular for a flow machine, for the non-hermetic sealing of a gap (12) between a rotor (10) and a stator (11), with a seal provided with a plurality of seal elements that are fixed to a seal element carrier, wherein the seal element carrier is arranged at least in sections in an accommodation space (16), which is bounded by a support element (17) and a cover element (18), **characterised in that** the seal element carrier is formed as a singly or multiply interrupted ring, wherein free ends (19, 20) of the seal element carrier overlap in the region of interruption sites in the circumferential direction, wherein contours of the support element (17) and cover element (18) are adapted to the contours of the seal element carrier and of the seal elements (15), and wherein a rotation prevention device (21, 22) is associated with at least one end (19, 20) of each part of the seal element carrier.

2. A sealing arrangement according to claim 1, **characterised in that** the seal is formed as a brush seal, the seal elements are formed as bristles (15), and the seal element carrier is formed as a bristle carrier (14).

3. A sealing arrangement according to claim 2, **characterised in that** the bristle carrier (14) is formed as an open and elastic ring, which is movably mounted in the accommodation space (16).

4. A sealing arrangement according to claim 3, **characterised in that** the bristle carrier (14) can move in the circumferential direction, wherein the or each rotation prevention device (20, 21) limits the mobility in the circumferential direction.

5. A sealing arrangement according to one or more of claims 2 to 4, **characterised in that** a first rotation prevention device (21) is associated with a first end (20) of the bristle carrier (14), which device limits the mobility in a main rotational direction of the rotor (10).

6. A sealing arrangement according to claim 5, **characterised in that** a second rotation prevention device (22) is associated with a second end (19) of the bristle carrier (14), which device limits the mobility in the direction opposite to the main rotational direction.

7. A sealing arrangement according to one or more of claims 2 to 6, **characterised in that** the ends (19, 20), overlapping in the circumferential direction, of the bristle carrier (14) formed as a spiral-shaped ring are displaced in the axial direction.

8. A sealing arrangement according to one or more of claims 2 to 7, **characterised in that** the ends (19, 20), overlapping in the circumferential direction, of the bristle carrier (14) formed as a spiral-shaped ring are displaced in the axial direction and in the radial direction.

9. A sealing arrangement according to claim 8, **characterised in that** the ends (19, 20) of the bristle carrier (14) are displaced in such a way that a radially inner lying end (19) of the bristle carrier (14) rests on bristles (15), which are fixed to the radially outer lying end (20) of the bristle carrier (14).

10. A sealing arrangement according to one or more of claims 2 to 9, **characterised in that** the contour of the support element (17) is adapted to the contour of the bristle carrier (14) formed as a spiral-shaped ring in such a way that the contour of the support element (17) follows in a thread-like manner the spiral-shaped or helical-shaped contour of the bristle carrier (14).

11. A sealing arrangement according to one or more of claims 2 to 10, **characterised in that** the bristles (15) of the brush seal are arranged parallel to the radial direction and are adjusted with respect to the radial direction.

12. A sealing arrangement according to claim 1, **characterised in that** the seal elements are formed as strips, disks, plates or segments.

13. A sealing arrangement according to one or more of claims 1 to 12, **characterised in that** the support element and the cover element are formed as contours on the stator.

14. A flow machine with at least one sealing arrangement according to one or more of claims 1 to 13.

15. A gas turbine, in particular an aircraft propulsion unit, with at least one sealing arrangement according to one or more of claims 1 to 13.

16. A steam turbine with at least one sealing arrangement according to one or more of claims 1 to 13.

## Revendications

1. Dispositif d'étanchéité, en particulier pour une turbomachine, pour le colmatage non-hermétique d'une fente (12) entre un rotor (10) et un stator (11), avec un joint qui dispose de plusieurs éléments d'étanchéité immobilisés sur un support pour éléments d'étanchéité, ce support pour éléments d'étanchéité étant disposé, au moins sur certains tronçons, dans un logement (16) limité par un élément d'appui (17) et un élément de recouvrement (18),
**caractérisé en ce que**
le support pour éléments d'étanchéité est une bague interrompue une ou plusieurs fois, les extrémités libres (19, 20) du support pour éléments d'étanchéité se chevauchant au niveau des zones d'interruption dans le sens périphérique, les contours de l'élément d'appui (17) et de l'élément de recouvrement (18) étant adaptés aux contours du support pour éléments d'étanchéité et des éléments d'étanchéité (15), et un dispositif anti-rotation (21, 22) étant associé à au moins une extrémité (19, 20) de chaque partie du support pour éléments d'étanchéité.

2. Dispositif d'étanchéité selon la revendication 1,
**caractérisé en ce que**
le joint est un joint brosse, les éléments d'étanchéité sont des poils (15) et le support pour éléments d'étanchéité est un porte-poils (14).

3. Dispositif d'étanchéité selon la revendication 2,
**caractérisé en ce que**
le porte-poils (14) est en forme de bague ouverte et élastique positionnée de manière mobile dans le logement (16).

4. Dispositif d'étanchéité selon la revendication 3,
**caractérisé en ce que**
le porte-poils (14) est mobile dans le sens périphérique, le ou chaque dispositif anti-rotation (20, 21) limitant la mobilité dans le sens périphérique.

5. Dispositif d'étanchéité selon l'une quelconque ou plusieurs des revendications 2 à 4,
**caractérisé en ce qu'**
un premier dispositif anti-rotation (21) limitant la mobilité dans un sens de rotation principal du rotor (10), est associé à une première extrémité (20) du porte-poils (14).

6. Dispositif d'étanchéité selon la revendication 5
**caractérisé en ce qu'**
un deuxième dispositif anti-rotation (22) limitant la mobilité dans le sens opposé au sens de rotation principal du rotor, est associé à une deuxième extrémité (19) du porte-poils (14).

7. Dispositif d'étanchéité selon l'une quelconque ou plusieurs des revendications 2 à 6,
**caractérisé en ce que**
les extrémités (19, 20), qui se chevauchent dans le sens périphérique, du porte-poils (14) configuré comme bague en spirale, sont décalées dans le sens axial.

8. Dispositif d'étanchéité selon l'une quelconque ou plusieurs des revendications 2 à 7,
**caractérisé en ce que**
les extrémités (19, 20), qui se chevauchent dans le sens périphérique, du porte-poils (14) configuré comme bague en spirale, sont décalées dans le sens axial et dans le sens radial.

9. Dispositif d'étanchéité selon la revendication 8,
**caractérisé en ce que**
les extrémités (19, 20) du porte-poils (14) sont décalées de manière à ce qu'une extrémité radialement à l'intérieur (19) du porte-poils (14) plaque contre les poils (15) immobilisés sur l'extrémité radialement à l'extérieur (20) du porte-poils (14).

10. Dispositif d'étanchéité selon l'une quelconque ou plusieurs des revendications 2 à 9,
**caractérisé en ce que**
le contour de l'élément d'appui (17) est adapté au contour du porte-poils (14) configuré en tant que bague en forme de spirale de manière à ce que le contour de l'élément d'appui (14) suive, tel un filetage, le contour en forme de spirale ou de ligne hélicoïdale du porte-poils (14).

11. Dispositif d'étanchéité selon l'une quelconque ou plusieurs des revendications 2 à 10,
**caractérisé en ce que**
les poils (15) du joint brosse sont disposés parallèlement au sens radial et dressés à l'encontre du sens radial.

12. Dispositif d'étanchéité selon la revendication 1,
**caractérisé en ce que**
les éléments d'étanchéité sont en forme de bandes ou de lamelles ou de segments.

13. Dispositif d'étanchéité selon l'une quelconque ou plusieurs des revendications 1 à 12,
**caractérisé en ce que**
l'élément d'appui et l'élément de recouvrement sont des contours sur le stator.

14. Turbomachine comportant au moins un dispositif d'étanchéité selon l'une quelconque ou plusieurs des revendications 1 à 13.

15. Turbine à gaz, en particulier groupe motopropulseur, comportant au moins un dispositif d'étanchéité selon l'une quelconque ou plusieurs des revendications 1 à 13.

16. Turbine à vapeur, comportant au moins un dispositif d'étanchéité selon l'une quelconque ou plusieurs des revendications 1 à 13
